Europäisches Patentamt

European Patent Office

Office européen des brevets

(11) Veröffentlichungsnummer: **0 496 236 A1**

## EUROPÄISCHE PATENTANMELDUNG

(21) Anmeldenummer: **92100410.7**

(51) Int. Cl.⁵: **B62D 1/26**

(22) Anmeldetag: **13.01.92**

(30) Priorität: **22.01.91 CH 188/91**

(43) Veröffentlichungstag der Anmeldung:
**29.07.92 Patentblatt 92/31**

(84) Benannte Vertragsstaaten:
**AT BE CH DE DK ES FR GB GR IT LI LU NL PT SE**

(71) Anmelder: **ADIGAN RESEARCH SA**
**Via Industria**
**CH-6814 Cadempino-Lamone(CH)**

(72) Erfinder: **Prioglio, Giulio**
**Via A. Riva 15**
**CH-6900 Lugano(CH)**

(74) Vertreter: **EGLI-EUROPEAN PATENT**
**ATTORNEYS**
**Horneggstrasse 4**
**CH-8008 Zürich(CH)**

(54) **Einrichtung zur Führung eines Schwertransport-Fahrzeugs entlang einer in einer Fahrbahn angeordneten Führungsbahn.**

(57) In der Fahrbahn (2) ist als Führungsbahn (6) ein U-förmiger Kanal mit vertikalen Seitenwandungen eingebettet. Das Fahrzeug (1) ist mit einer Bahnfolgevorrichtung (11) versehen, die mit der Führungsbahn (6) zusammenwirkt, um ein Führungssignal für die Räder (3) zu erzeugen. Die Bahnfolgevorrichtung (11) umfasst: einen im Kanal (7) führbaren Lenkfuss (13); eine Trägervorrichtung zur Abstützung des Lenkfusses (13) am Fahrzeug (1) über eine vertikale Tragsäule (17), einen horizontalen länglichen Schwenkarm (21) und ein vertikalachsiges Drehlager; und einen am Drehlager angeordneten Winkelsensor. Am Lenkfuss (13) kann ein Schuh mit rechteckigem horizontalem Querschnitt und zwei vertikalen seitlichen Wandungen vorgesehen sein, der über ein anderes vertikalachsiges Drehlager (20) an der Tragsäule (17) abgestützt ist. Zwischen den Seitenwandungen des Kanals und des Schuhs beträgt das Spiel vorzugsweise 1 % der Länge des Schwenkarms (21). Der Kanal kann einen horizontalen Boden und der Schuh eine geneigte Fläche aufweisen.

Fig. 4

Die Erfindung betrifft eine Einrichtung zur Führung eines mit lenkbaren Rädern versehenen Schwertransport-Fahrzeugs auf einer im wesentlichen ebenen horizontalen Fahrbahn entlang einer in der Fahrbahn eingebetteten Führungsbahn, wobei das Fahrzeug versehen ist mit einer Bahnfolgevorrichtung, die mit der Führungsbahn zusammenwirkt, um ein Führungssignal zu erzeugen, das einer relativen Lage des Fahrzeugs zur Führungsbahn entspricht, und einer Lenkvorrichtung für die Räder, der das Führungssignal zugeleitet wird und die den Einschlag der Räder so steuert, dass das Fahrzeug beim Fahren im wesentlichen der Führungsbahn folgt, wobei die Führungsbahn als in der Fahrbahn eingelassener Kanal von im wesentlichen U-förmigem Querprofil mit im wesentlichen vertikalen Seitenwandungen ausgebildet ist, und die Bahnfolgevorrichtung versehen ist mit einem Lenkfuss, der im Kanal positionierbar und darin von dessen Seitenwandungen während der Fahrt des Fahrzeugs führbar ist, einer Trägervorrichtung zur Abstützung des Lenkfusses am Fahrzeug zumindest über eine vertikale Tragsäule, einen horizontalen länglichen Schwenkarm und ein Drehlager mit einer vertikalen Drehachse, die im wesentlichen um die Länge des Schwenkarms von einer vertikalen Achse eines rotationssymmetrischen Elements des Lenkfusses beabstandet ist, und einem am Lenkfuss angeordneten Räumungselement zur Befreiung der Führungsbahn von Hindernissen während der Fahrt des Fahrzeugs.

Eine Einrichtung dieser Art ist aus EP-A-0151982 bekannt.

Das Lenksystem dieser Einrichtung nach EP-A-0151982 ist jedoch ausschliesslich mechanisch ausgebildet. Beim automatischen Lenkvorgang betätigt die Verschiebung des Sensors direkt die Lenkung der Räder, aus diesem Grund kann die Einrichtung nach EP-A-0151982 nur beschränkte Lasten transportieren. Auch ist es nicht möglich, auf diese Weise mehr als eine Lenkachse zu steuern.

Auch ist bei der Einrichtung nach EP-A-0151982 das System zur Reinigung der in der Fahrbahn eingebetteten Führungsbahn nur zum Entfernen von kleineren Gegenständen geeignet.

Deshalb ist diese Einrichtung nach EP-A-0151982 nicht im Bereich von sehr verschmutzen, staubigen und stark mit Eisenpartikeln verseuchten industriellen Anlagen wie Stahlwerken verwendbar.

Gerade in solchen industriellen Anlagen besteht aber ein Bedarf für eine Einrichtung der genannten Art, die erlauben soll, beim Transport von tonnenschweren Gegenständen oder Ladungen weniger Personal zur Gewährleistung der Sicherheit einzusetzen und das menschliche Versagen als Fehlerquelle zu reduzieren. Ein Fehler beim Führen eines tonnenschwer beladenen Grossfahrzeugs im Bereich einer industriellen Anlage ist nämlich weit gefährlicher und auch schwieriger zu beheben als im üblichen Strassenverkehr.

Die elektromechanische Ausbildung eines Lenksystems mit einem Potentiometer als Drehungssensor ist aus DE-A-2817843 bekannt.

Dabei ist die mechanische Bahnfolgevorrichtung an einem Parallelogramm abgestützt, das zum Heben aus und Absetzen in die Führungsbahn dient. Nachteilig ist bei dieser Einrichtung nach DE-A-2817843, dass die im wesentlichen horizontalen Längselemente des Parallelogramms aus der Längsrichtung des Fahrzeugs ausschwenken. Deshalb muss der wirksame Drehwinkelbereich des Potentiometers beschränkt bleiben, was dann durch eine erhöhte Empfindlichkeit auf der elektrischen Seite des Systems zu kompensieren ist. Diese Empfindlichkeit ist aber ihrerseits der Widerstands- und Strapazierfähigkeit des Systems abträglich.

Im Bereich von sehr verschmutzen, staubigen und stark mit Eisenpartikeln verseuchten industriellen Anlagen wie Stahlwerken müsste ein solches Parallelogramm und insbesondere dessen Längselemente sehr widerstands- und strapazierfähig, also entsprechend schwer konstruiert werden. Als Folge davon würden schwere und entsprechend träge Längselemente auschwenken, was eine entsprechende Dimensionierung der Lager, der Bahnfolgevorrichtung und der Führungsbahn sowie deren entsprechende Belastung zur Folge hätte.

Deshalb ist es nicht ohne weiteres möglich, die Bahnfolgevorrichtung und das Räumungselement nach EP-A-0151982 auf die Einrichtung nach DE-A-2817843 zu montieren, um die so kombinierte Einrichtung im Bereich von sehr verschmutzen, staubigen und stark mit Eisenpartikeln verseuchten industriellen Anlagen wie Stahlwerken zu verwenden.

Bei Einrichtungen zur Führung von Fahrzeugen auf einer Fahrbahn mit einer darin eingebetteten, magnetisch oder elektromagnetisch detektierbaren Führungsbahn (vgl. beispielsweise in EP-384841, WO-90/4821, US-2317400) ist die Detektion der Führungsbahn anfällig auf deren Verschmutzung durch eisen- bzw. stahlhaltigen Schmutz.

Bei Einrichtungen zur Führung von Fahrzeugen auf einer Fahrbahn mit einer bandförmig darauf aufgetragenen, optisch detektierbaren Führungsbahn (vgl. beispielsweise in EP-12554) ist die Detektion der Führungsbahn anfällig auf deren Verschmutzung durch Verschmierung und Schmutzansammlung.

Bei Einrichtungen zur Führung von Fahrzeugen auf einer Fahrbahn mit seitlichen Führungsborden (vgl. beispielsweise in DE-3405872) oder einem mittigen Führungssteg (vgl. beispielsweise in DE-3342270) ragen die Führungsborden bzw. der Führungssteg störend über die Ebene der Fahrbahn, sie bilden eine Unfallquelle für das Personal, ein Hindernis auf dem Betriebsareal und eine schwer zu reinigende Stelle bzw. Ursache von Schmutzansammlung.

Im Bereich von industriellen Anlagen der genannten Art sind Eisenbahngleise teure Einrichtungen, insbesondere weil sie nicht auf eigener Trasse, sondern auf Fahrbahnen für bereifte Fahrzeuge anzulegen sind, und auch, weil sie an ihre eigenen Abstell-, Rangier- und Reparaturanlagen anzuschliessen sind. Auch bringt der gemischte Verkehr von schienengebundenen und bereiften Fahrzeugen seine eigenen Probleme wie die gegenseitige Behinderung der zwei Arten von Fahrzeugen und die entsprechenden Unfallrisiken und Betriebsstörungen. Deshalb ist die Führung eines Schwertransport-Fahrzeugs auf einem Eisenbahngleis keine günstige Lösung des Schwertransport-Problems im Bereich einer sehr verschmutzen, staubigen und stark mit Eisenpartikel verseuchten industriellen Anlage wie ein Stahlwerk.

Es ist daher Aufgabe der Erfindung, eine Einrichtung der eingangs genannten Art vorzuschlagen, die ermöglicht, im Bereich einer sehr verschmutzen, staubigen und stark mit Eisenpartikel verseuchten industriellen Anlage wie ein Stahlwerk ein bereiftes Schwertransport-Fahrzeug auf gleiche Art wie ein schienengebundenes Schwertransport-Fahrzeug zu verwenden, ohne die vorangehend erwähnten Nachteile der bekannten Lösungen bei einem Schwertransport-Problem in Kauf zu nehmen.

Zur Lösung dieser Aufgabe ist eine Einrichtung der eingangs genannten Art erfindungsgemäss dadurch gekennzeichnet, dass die Bahnfolgevorrichtung mit einem am bzw. an einem Drehlager angeordneten Winkelsensor zur Abgabe des Führungssignals entsprechend einer Winkellage des Schwenkarms relativ zu einer Längsrichtung des Fahrzeugs versehen ist, und das Räumungselement als Schuh ausgebildet ist, der einen im wesentlichen rechteckigen horizontalen Querschnitt sowie zwei im wesentlichen ebene vertikale seitliche Wandungen aufweist und über ein anderes Drehlager mit vertikaler Drehachse an der Tragsäule abgestützt ist, wobei die seitlichen Wandungen des Schuhs in dessen Querschnitt die längeren Seiten des Rechtecks ergeben und die vertikalen Drehachsen des einen und des anderen Drehlagers im wesentlichen um die Länge des Schwenkarms voneinander beabstandet sind.

Zusätzlich zur Vermeidung der erwähnten Nachteile der bekannten Lösungen liegt ein Vorteil der Erfindung darin, dass es ermöglicht wird, im Bereich einer sehr verschmutzen, staubigen und stark mit Eisenpartikel verseuchten industriellen Anlage wie ein Stahlwerk ein bereiftes Schwertransport-Fahrzeug wie ein schienengebundenes Schwertransport-Fahrzeug zu verwenden.

Ein daraus abgeleiteter Vorteil ist die Möglichkeit, das Fahrzeug mit Strom zu versorgen und anzutreiben, beispielsweise wie bei einem Trolleybus mit Hilfe von Stromabnehmern und Fahrdrähten.

Vorzugsweise ist zwischen den Seitenwandungen des Kanals und den seitlichen Wandungen des Schuhs ein Spiel vorgesehen, das etwa 1 % der Länge des Schwenkarms beträgt. Eine derartige Konstruktion bringt den Vorteil einer geringen Fertigungspräzision und somit einer noch einfacheren und daher noch günstigeren Fertigung.

Auch kann der Kanal vorzugsweise mit einem im wesentlichen horizontalen Boden des U-förmigem Querprofils ausgebildet sein und der Schuh mindestens eine um 30° bis 60° zur Fahrtrichtung hin abwärts geneigte Fläche aufweisen, die im Querschnitt des Schuhs eine der kürzeren Seiten des Rechtecks ergibt.Eine derartige Konstruktion bringt den Vorteil einer zumindest partiellen Reinigung des Kanals durch Herausschaufeln des darin angesammelten Schmutzes dank der Form der geneigten Fläche als Spatenblatt oder Schaufelblatt.

Nachstehend wird ein Beispiel einer Ausbildung der Erfindung anhand der Zeichnung näher erläutert. Es zeigen:

Fig. 1 eine schräg von unten gesehene perspektivische Darstellung eines Schwertransport-Fahrzeugs und einer erfindungsgemässen Führungseinrichtung;

Fig. 2 eine ebenfalls schräg von unten gesehene perspektivische Darstellung einer hinteren Partie des Schwertransport-Fahrzeugs und der erfindungsgemässen Führungseinrichtung der Fig. 1;

Fig. 3 eine in einer Fahrbahn eingebettete Führungsbahn, im Querschnitt durch diese;

Fig. 4 eine mit der Führungsbahn zusammenwirkende und am Fahrzeug angeordnete Bahnfolgevorrichtung mit einem daran angeordneten Schuh, teilweise im Längsschnitt;

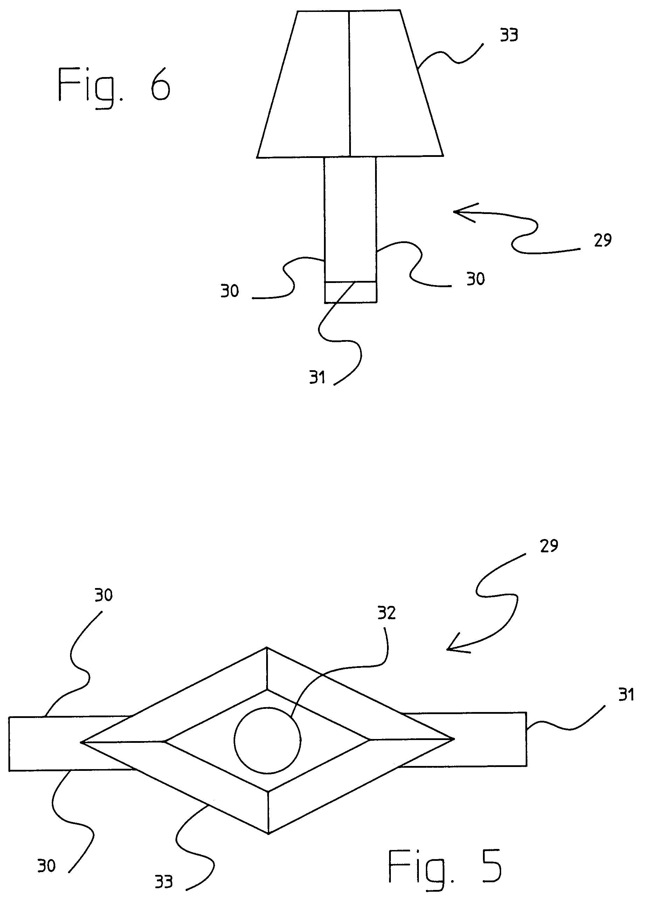

Fig. 5 eine Draufsicht des in Fig. 4 in Seitenansicht dargestellten Schuhs; und

Fig. 6 eine Vorderansicht des in Fig. 4 in Seitenansicht dargestellten Schuhs.

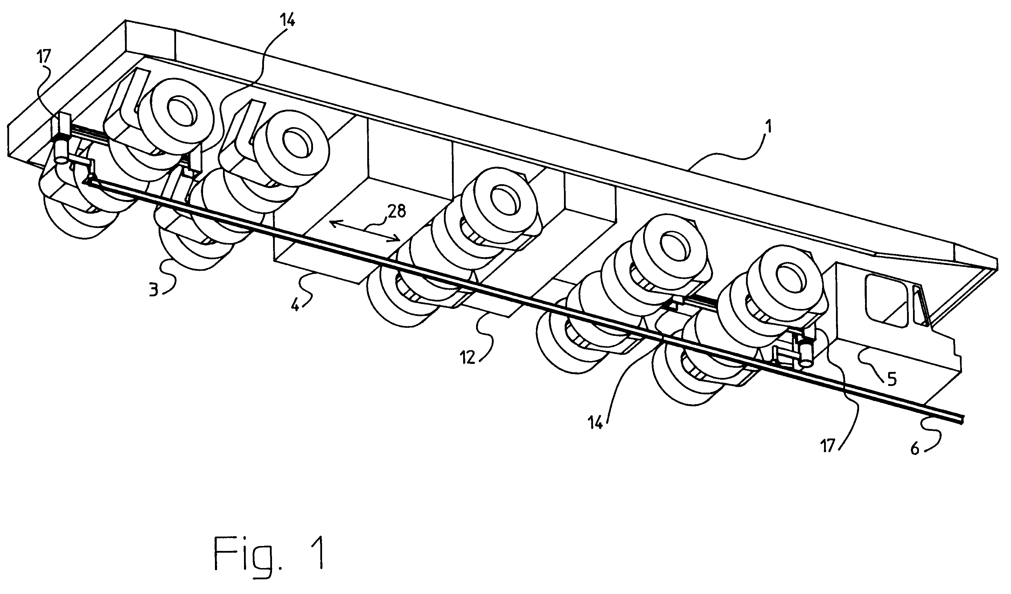

In Fig. 1 ist ein Schwertransport-Fahrzeug mit 1 bezeichnet und schräg von unten gesehen perspektivisch dargestellt, als ob er auf einer durchsichtigen Fahrbahn stehen oder fahren würde.

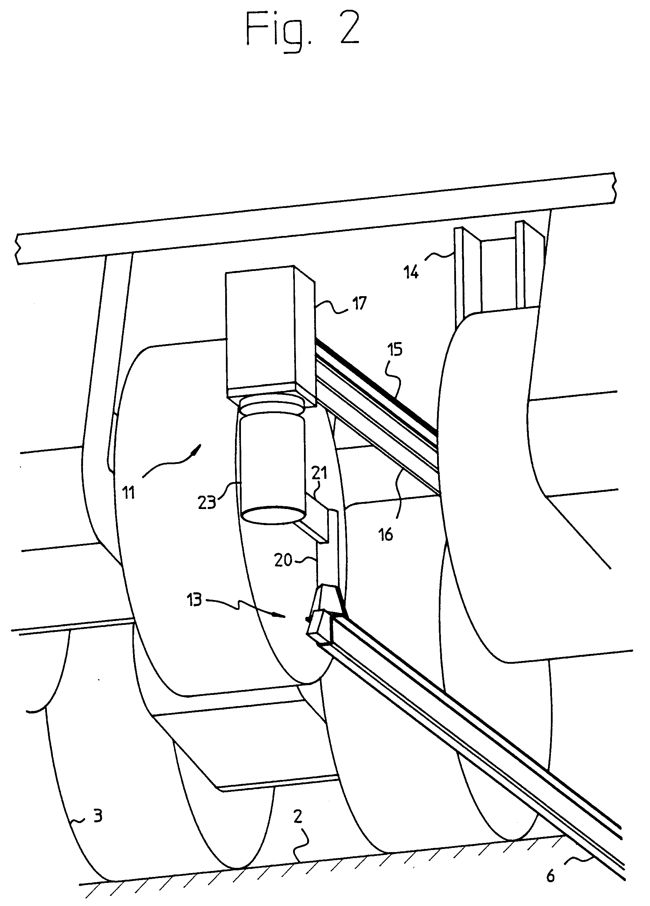

Diese Fahrbahn ist in Fig. 2 mit 2 angedeutet und im wesentlichen eben und horizontal. Es handelt sich beispielsweise um einen befahrbaren Boden in einer industriellen Anlage wie einem Stahlwerk, wo tonnenschwere Gegenstände oder Ladungen von einem Ort zum anderen zu transportieren sind.

Das Fahrzeug 1 ist mit Rädern 3 versehen, von denen je nach Bedarf alle oder nur einige einzeln oder in Gruppen lenkbar sein können. Dies ist in der Technik der Schwertransport-Fahrzeuge wohlbekannt und braucht nicht näher erläutert zu werden.

Der Antrieb des Fahrzeugs 1 erfolgt im dargestellten Beispiel durch einen Unterflur-Dieselmotor 4, der von einer Fahrerkabine 5 aus betrieben wird. Das Fahrzeug 1 könnte aber auch von einem Elektromotor angetrieben und dazu wie bei einem Trolleybus mit Hilfe von nicht dargestellten Stromabnehmern und Fahrdrähten oder mit Hilfe von nicht dargestellten Batterien mit Strom versorgt werden.

Die Lenkung des Fahrzeugs 1 erfolgt bei einer ersten, nicht geführten Betriebsweise auf herkömmliche Weise von der Fahrerkabine 5 aus mittels eines Lenkrads. Bei dieser Betriebsweise verhält sich das Fahrzeug 1 wie ein Strassenfahrzeug.

Im Hinblick auf eine geführte Betriebsweise, wie sie im Bereich von industriellen Anlagen nötig oder erwünscht ist, ist in der Fahrbahn 2 eine Führungsbahn 6 eingebettet, welche die gewünschte Spur definiert, entlang welcher das Fahrzeug 1 zu führen ist. Diese gewünschte Spur kann geradlinig sein oder Kurven aufweisen, der Radius solcher Kurven soll allerdings wesentlich grösser sein als die Gesamtlänge des zu führenden Fahrzeugs 1, sonst treten besondere Probleme auf.

Die Führungsbahn 6 ist als in der Fahrbahn 2 eingelassener Kanal 7 ausgebildet, der ein im wesentlichen U-förmiges Querprofil aufweist. Die Seitenwandungen 8 des Kanals 7 sind im wesentlichen vertikal angeordnet, während der Boden 10 des Kanals 7 vorzugsweise im wesentlichen horizontal und eben ist. Zusätzlich kann das Querprofil des Kanals 7 seitliche Flansche 9 aufweisen, welche sowohl das Profil selbst als auch die Fahrbahn 2 in unmittelbarer Nähe des Kanals 7 versteifen und schützen. Das Profil des Kanals 7 wird so in die Fahrbahn 2 eingebettet, dass die Oberseite der Flansche 9 im wesentlichen in der gleichen Ebene wie die umgebende Fahrbahn 2 zu liegen kommt.

Am Fahrzeug 1 sind zwei im wesentlichen gleiche, gesamthaft mit 11 bezeichnete Bahnfolgevorrichtungen angeordnet, von denen jede mit der Führungsbahn 6 zusammenwirkt, um je ein Führungssignal zu erzeugen, wie es weiter unten näher erläutert wird.

In der einen Fahrtrichtung wird das eine Führungssignal, in der anderen Fahrtrichtung das andere Führungssignal einer Lenkvorrichtung 12 für die Räder 3 zugeleitet. Das betreffende Führungssignal entspricht einer relativen Lage des Fahrzeugs 1 zur Führungsbahn 6, und aufgrund dieses Führungssignals steuert die Lenkvorrichtung 12 den Einschlag der Räder 3 auf solche Weise, dass das Fahrzeug beim Fahren im wesentlichen der Führungsbahn 6 folgt.

Die Führung eines Fahrzeugs aufgrund eines Führungssignals aus einer Bahnfolgevorrichtung für eine vom Fahrzeug zu folgende Führungsbahn ist beispielsweise aus den oben zitierten US-2317400, EP-12554 oder EP-384841 bekannt. Im Fahrzeugbau ist auch bekannt, den Einschlag von Rädern mit Antriebsmitteln wie elektrischen oder hydraulischen Motoren oder noch hydraulischen oder pneumatischen Zylindern oder mit einer Kombination solcher Antriebsmittel einzustellen und den entsprechenden Regelkreis auszubilden. Diese Mittel und dieser Regelkreis werden deshalb hier nicht näher beschrieben.

Beim Vorliegen von zwei Führungen, von denen (relativ zur Fahrerkabine) die eine für die Fahrtrichtung "vorwärts" und die andere für die Fahrtrichtung "rückwärts" bestimmt ist, ist es mit verschiedenen Mitteln wie mechanischen oder elektronischen Umschaltern erreichbar, in Abhängigkeit von der Fahrtrichtung das eine Führungssignal zur Lenkung der Räder auszuwerten und das andere zu ignorieren, oder gegebenenfalls auch beide Führungssignale auszuwerten. Bei dem hier beschriebenen Fahrzeug 1 wird beispielsweise das Führungssignal jeweils aus der in Fahrtrichtung vorderen Bahnfolgevorrichtung ausgewertet, während das andere Führungssignal aus der in Fahrtrichtung hinteren Bahnfolgevorrichtung ignoriert wird.

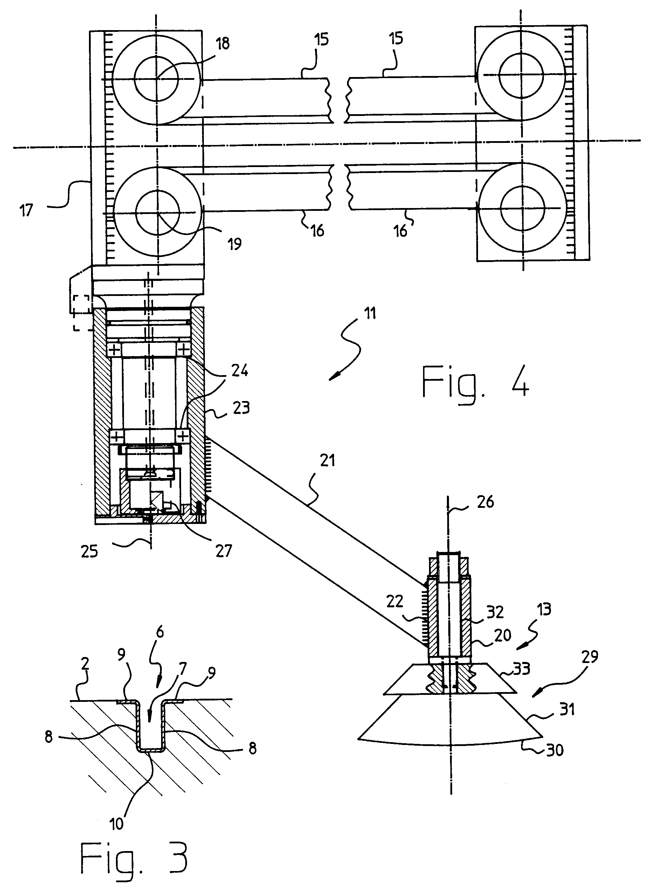

Jede der Bahnfolgevorrichtungen 11 umfasst einen gesamthaft mit 13 bezeichneten Lenkfuss, der im Kanal 7 der Führungsbahn 6 positionierbar ist. Um das Absenken bzw. Herausheben des Lenkfusses 13 in bzw. aus dem Kanal 7 zu gewährleisten, ist eine Parallelogramm-Befestigung der Bahnfolgevorrichtung 11 am Fahrzeug 1 vorgesehen. Diese Parallelogramm-Befestigung umfasst im wesentlichen die am Fahrzeug 1 abgestützte Aufhängung 14, die beiden Längsarme 15 und 16, den Tragkopf 17 der Bahnfolgevorrichtung 11 sowie die vier entsprechenden Gelenke, von denen zur Vereinfachung nur die beiden Gelenke 18 und 19 in Fig. 4 dargestellt sind. Das Absenken bzw. Herausheben des Lenkfusses 13 erfolgt beispielsweise mit Antriebsmitteln wie elektrischen oder hydraulischen Motoren oder noch hydraulischen oder pneumatischen Zylindern oder mit einer Kombination solcher Antriebsmittel.

Der Lenkfuss 13 ist so ausgebildet, dass er von den Seitenwandungen 8 und 9 des Kanals 7 geführt wird, wenn er während der Fahrt des Fahrzeugs im Kanal 7 abgesenkt und eingesetzt ist. In Fig. 1 und 2 ist der Lenkfuss 13 in dieser im Kanal 7 eingesenkten Lage dargestellt.

In einer (nicht dargestellten) einfachsten Ausbildung des Lenkfusses 13 kann dieser direkt aus dem unteren Ende einer vertikalen zylindrischen Säule 20 bestehen. Der Durchmesser eines solchen zylindrischen Lenkfusses 13 ist dann gerade etwas kleiner als der Abstand der Seitenwandungen 8 und 9 des Kanals 7 voneinander, um zu erlauben, die Säule 20 in den Kanal 7 zu positionieren.

Die Säule 20 ist am einen Ende 22 eines horizontalen länglichen Schwenkarms 21 abgestützt, der an seinem anderen Ende 23 seinerseits über ein Paar von Drehlagern 24 am Tragkopf 17 der Bahnfolgevorrichtung 11 abgestützt ist. Folglich ist der Schwenkarm 21 über die Drehlager 24, die Tragsäule 17, die Längsarme 15 und 16 und die Aufhängung 14 am Fahrzeug 1 feststehend abgestützt, denn ausser beim Heben oder Senken der Tragsäule 17 verhält sich diese wie ein am Fahrzeug 1 feststehend abgestütztes Teil.

Die Drehlager 24 haben eine gemeinsame vertikale Drehachse 25, die im wesentlichen um die Länge des Schwenkarms 21 von der Achse 26 der vertikalen zylindrischen Säule 20 beabstandet ist.

Hierzu ist zu bemerken, dass sich die beschriebene Verwendung von zwei Drehlagern 24 mit gemeinsamer vertikaler Drehachse 25 aus praktischen Ueberlegungen zur Konstruktion und Stabilität der Vorrichtung ergibt, grundsätzlich aber auch ein einziges Drehlager 24 verwendet werden könnte.

An einem der Drehlager 24 bzw. am einzigen Drehlager 24 ist ein Winkelsensor 27 angeordnet, der das Führungssignal entsprechend der Winkellage des Schwenkarms 21 an der Tragsäule 17 abgibt. Als Referenzrichtung dieser Winkellage wird die Längsrichtung 28 des Fahrzeugs 1 genommen, sofern keine besonderen Gründe für eine andere Wahl dieser Referenzrichtung vorliegen. Der Winkelsensor 27 kann beispielsweise als Potentiometer, optischer Winkelmesser, elektromagnetischer Resolver und dergleichen ausgebildet sein.

Wenn der Lenkfuss 13 im Kanal 7 abgesenkt ist und das Fahrzeug 1 fährt, führt der Schwenkarm 21 um die Drehachse 25 die nötigen Schwenkbewegungen aus, um den gegebenenfalls variierenden horizontalen Abstand zwischen dieser Drehachse 25 und der Führungsbahn 6 auszugleichen. Dabei kann sich der vom unteren Ende der vertikalen zylindrischen Säule 20 gebildete Lenkfuss 13 wie benötigt in und relativ zur Führungsbahn 6 drehen. Der Winkelsensor 27 setzt die Schwenkbewegungen des Schwenkarms 21 in entsprechende Führungssignale um, welche über die Lenkvorrichtung 12 die Räder 3 steuern, um den horizontalen Abstand zwischen der Drehachse 25 und der Führungsbahn 6 zu reduzieren und somit zu bewirken, dass das Fahrzeug 1 im wesentlichen entlang der Führungsbahn 6 fährt.

Um unter anderem den Verschleiss des Lenkfusses 13 und die Biegebeanspruchung der Säule 20 zu vermindern, ist am Lenkfuss 13 ein Schuh 29 vorgesehen, der mit zwei im wesentlichen ebenen und trapezförmigen seitlichen Wandungen 30 und zwei im wesentlichen ebenen, um etwa 45° zur Horizontalen und Vertikalen geneigten Frontwandungen 31 versehen ist. Zusammen geben die seitlichen Wandungen 30 und die Frontwandungen 31 dem Schuh 29 einen im wesentlichen rechteckigen horizontalen Querschnitt, in welchem die seitlichen Wandungen 30 die längeren Seiten und die Frontwandungen 31 die kürzeren Seiten des Rechtecks ergeben.

Der Schuh 29 ist an einer zylindrischen Stange 32 abgestützt, während die Säule 20 mit einem axialen zylindrischen Hohlraum versehen ist, in dem die Stange 32 um die Achse 26 drehbar gelagert ist. Zusammen bilden also die ineinandergefügten Säule 20 und Stange 32 ein Drehlager mit vertikaler Drehachse 26, über welches der Schuh 29 am Schwenkarm 21 und dadurch am Fahrzeug 1 abgestützt ist. Die drehbare Befestigung der Stange 32 am Schuh 29 und an der Säule 20 kann beispielsweise durch Klemmringe und dergleichen gewährleistet sein. Das genannte Drehlager bzw. die drehbar ineinandergefügten Säule 20 und Stange 32 stellen zusammen ein rotationssymmetrisches Element des Lenkfusses dar, dessen Achse 26 im wesentlichen um die Länge des Schwenkarms 21 von der vertikalen Drehachse 25 der Drehlager 24 bzw. des Drehlagers 24 beabstandet ist.

Durch die Drehbarkeit des Schuhs 29 um die vertikale Achse 26 gegenüber dem Schwenkarm 21 wird gewährleistet, dass der Schuh 29 immer parallel zum Kanal 7 bleiben kann und somit trotz seines rechteckigen horizontalen Querschnitts immer in den Kanal 7 hineinpasst, auch wenn das Fahrzeug 1 nicht parallel zur Führungsbahn 6 steht. Bei der vorangehend beschriebenen Verwendung eines als rotationssymmetrischer Zapfen oder als Ende einer zylindrischen Säule ausgebildeten Lenkfusses war hingegen keine Parallelismus einzuhalten.

Zwischen den Seitenwandungen 8 des Kanals 7 und den seitlichen Wandungen 30 des Schuhs 29 ist ein Spiel vorgesehen, das etwa 1 % der Länge des Schwenkarms beträgt. Dieses Spiel ist zu klein, um die Führung des Fahrzeugs 1 entlang der Führungsbahn 6 zu beeinträchtigen, ermöglicht aber das Gleiten des Lenkfusses 13 im Kanal 7 trotz einer darin möglichen Ansammlung von Schmutz.

Die Frontwandungen 31 können als ebene Flächen, die um 30° bis 60° zur Horizontalen und/oder Vertikalen geneigt sind, oder als konkav gekrümmte Flächen, die örtlich um 30° bis 60° zur Horizontalen und/oder Vertikalen geneigt sind, ausgebildet sein. Mit geneigten ebenen Flächen erhalten die Frontwandungen 31 etwa die Form eines Spatenblatts, mit konkav gekrümmte Flächen etwa die Form eines Schaufelblatts, wodurch der im Kanal angesammelten Schmutz beim Fahren vom Lenkfuss 13 herausgeschaufelt wird.

In einer weiteren, nicht dargestellten Ausbildung des Schuhs kann eine seiner Frontwandungen etwa vertikal sein, was die Fertigung des Schuhs erleichtert. Bei dieser Ausbildung ist aber der betreffende Lenkfuss zweckmässigerweise nur in einer Richtung benutzbar, nämlich so, dass die geneigte Frontwandung vorne und die vertikale Frontwandung hinten liegt. Zum Fahren in die andere Richtung ist dann der Lenkfuss aus dem Kanal zu heben und er darf erst wieder gesenkt werden, nachdem der Schuh um die Achse 26 in die andere Richtung gedreht wurde.

Es ist zweckmässig, am Lenkfuss 13 eine Schutzmanschette 33 anzubringen, welche die Säule 20 etwas über der Fahrbahn 2 umfasst und praktisch bis zur Ebene der Fahrbahn 2 reicht. Beispielsweise kann diese Schutzmanschette 33 im wesentlichen die Form eines Pyramidenstumpfes aufweisen und deren horizontaler Querschnitt rautenförmig sein, damit sie wie ein Pflug wirkt, um den vor dem Lenkfuss 13 angesammelten Schmutz wegzuräumen. Es wird auf Fig. 3 und 4 verwiesen, die im gleichen Massstab gezeichnet und auf dem Zeichnungsblatt so zueinander angeordnet sind, dass daraus die relative Lage der Führungsbahn 6 und des darin eingeführten Lenkfusses 13 erkennbar ist und insbesondere hervorgeht, wie der Schuh 29 in den Kanal 7 passt und die Schutzmanschette 33 den Kanal 7 überdeckt.

Andere, nicht dargestellte Ausbildungen des im Kanal 7 positionierbaren und darin von dessen Seitenwandungen 8 während der Fahrt des Fahrzeugs führbaren Lenkfusses 13 sind noch denkbar und möglich, beispielsweise mit einer Rolle, deren horizontale Achse wie bei einem Fahrrad über eine Gabel an der Säule 20 abgestützt ist, oder mit einem Paar von solchen Rollen in Tandem-Anordnung hintereinander.

Es versteht sich, dass bei der nicht geführten Betriebsweise, wenn das Fahrzeug 1 auf herkömmliche Weise von der Fahrerkabine 5 aus mittels eines Lenkrads gelenkt wird und sich dabei wie ein Strassenfahrzeug verhält, die Bahnfolgevorrichtungen 11 durch Betätigung ihrer Parallelogramm-Befestigung mit Hilfe der bereits erwähnten Antriebsmittel voll angehoben sind und somit der jeweilige Lenkfuss 13 aus dem Kanal 7 herausgehoben ist.

**Patentansprüche**

1. Einrichtung zur Führung eines mit lenkbaren Rädern (3) versehenen Schwertransport-Fahrzeugs (1) auf einer im wesentlichen ebenen horizontalen Fahrbahn (2) entlang einer in der Fahrbahn eingebetteten Führungsbahn (6), wobei das Fahrzeug versehen ist mit

   - einer Bahnfolgevorrichtung (11), die mit der Führungsbahn (6) zusammenwirkt, um ein Führungssignal zu erzeugen, das einer relativen Lage des Fahrzeugs (1) zur Führungsbahn entspricht, und
   - einer Lenkvorrichtung (12) für die Räder (3), der das Führungssignal zugeleitet wird und die den Einschlag der Räder so steuert, dass das Fahrzeug (1) beim Fahren im wesentlichen der Führungsbahn (6) folgt,

   **gekennzeichnet dadurch, dass**

   - die Führungsbahn (6) als in der Fahrbahn (2) eingelassener Kanal (7) von im wesentlichen U-förmigem Querprofil mit im wesentlichen vertikalen Seitenwandungen (8) ausgebildet ist, und
   - die Bahnfolgevorrichtung (11) versehen ist mit
     - einem Lenkfuss (13), der im Kanal (7) positionierbar und darin von dessen Seitenwandungen (8) während der Fahrt des Fahrzeugs (1) führbar ist,
     - einer Trägervorrichtung zur Abstützung des Lenkfusses (13) am Fahrzeug (1) zumindest über eine vertikale Tragsäule (17), einen horizontalen länglichen Schwenkarm (21) und ein Drehlager (24) mit einer vertikalen Drehachse (25), die im wesentlichen um die Länge des Schwenkarms von einer vertikalen Achse (26) eines rotationssymmetrischen Elements (20,32) des Lenkfusses (13) beabstandet ist, und
     - einem am bzw. an einem Drehlager (24) angeordneten Winkelsensor (27) zur Abgabe des Führungssignals entsprechend einer Winkellage des Schwenkarms (21) relativ zu einer Längsrichtung (28) des Fahrzeugs (1).

2. Einrichtung nach Anspruch 1, **dadurch gekennzeichnet**, **dass** am Lenkfuss (13) ein Schuh (29) vorgesehen ist, der einen im wesentlichen rechteckigen horizontalen Querschnitt sowie zwei im wesentlichen ebene vertikale seitliche Wandungen (30) aufweist und über ein anderes Drehlager (20,32) mit vertikaler Drehachse (26) an der Tragsäule (17) abgestützt ist, wobei die seitlichen Wandungen des Schuhs in dessen Querschnitt die längeren Seiten des Rechtecks ergeben und die vertikalen Drehachsen (25,26) des einen und des anderen Drehlagers (24;20,32) im wesentlichen um die Länge des Schwenkarms (21) voneinander beabstandet sind.

3. Einrichtung nach Anspruch 2, **dadurch gekennzeichnet**, **dass** zwischen den Seitenwandungen (8) des Kanals (7) und den seitlichen Wandungen (30) des Schuhs (29) ein Spiel vorgesehen ist, das etwa 1 % der Länge des Schwenkarms (21) beträgt.

4. Vorrichtung nach Anspruch 2, **dadurch gekennzeichnet**, **dass** der Kanal (7) mit einem im wesentlichen horizontalen Boden (10) des U-förmigem Querprofils ausgebildet ist und der Schuh (29) mindestens eine um 30° bis 60° geneigte Fläche (31) aufweist, die im Querschnitt des Schuhs eine der kürzeren Seiten des Rechtecks ergibt.

Fig. 1

EP 0 496 236 A1

# Fig. 2

Fig. 4

Fig. 3

Fig. 6

33

29

30    30

31

29

30

32

31

30

33

Fig. 5

11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 151 982 (UTTSCHEID) <br> * Seite 5, letzter Absatz - Seite 7, Absatz 1; Abbildungen 1-3 * <br> --- | 1,2,4 | B62D1/26 |
| D,Y | DE-A-2 817 843 (FENDT) <br> * Seite 5, letzter Absatz - Seite 7, letzter Absatz; Abbildung 1 * <br> --- | 1,2,4 | |
| A | GB-A-102 385 (SCHERL) <br> * Seite 3, Zeile 3 - Zeile 23; Abbildungen 1,2,8 * <br><br><br> ----- | 1,4 | |
| | | | **RECHERCHIERTE SACHGEBIETE (Int. Cl.5)** <br><br> B62D |

Der vorliegende Recherchenbericht wurde für alle Patentansprüche erstellt

| Recherchenort | Abschlußdatum der Recherche | Prüfer |
|---|---|---|
| DEN HAAG | 28 APRIL 1992 | HAGEMAN M. |